# EUROPEAN PATENT APPLICATION

(11) **EP 4 789 834 A1**
(43) Date of publication of application: **12.08.2026**
(21) Application number: 25181920.7
(22) Date of filing: 11.06.2025
(51) Int. Cl.: B29C 33/00, B29C 45/26

(54) **CRASH PAD MANUFACTURING APPARATUS**

(30) Priority: 10.02.2025 KR 20250016690
(71) Applicant: Hyundai Mobis Co., Ltd., Gangnam-gu Seoul 06141 (KR); Seoyon Autovision Co., Ltd., Dangjin-si, Chungcheongnam-do 31816 (KR)
(72) Inventor: CHOI, Ik Keun, 16891 Yongin-si, Gyeonggi-do (KR); YOU, Young In, 31816 Dangjin-si, Chungcheongnam-do (KR); YOU, Young Jae, 31816 Dangjin-si, Chungcheongnam-do (KR); HWANG, Kwon Jun, 31816 Dangjin-si, Chungcheongnam-do (KR); LEE, Dong Eun, 31816 Dangjin-si, Chungcheongnam-do (KR)
(74) Representative: Jung, Minkyu

(57) **Abstract**

A crash pad manufacturing apparatus for manufacturing a crash pad having an airbag door, and a method therefor are provided. The crash pad manufacturing apparatus includes a first mold including a core for molding the airbag door and the crash pad, a second mold coupled to the first mold to form a molding space on the core, and a chuck assembly for seating a scrim on a molding portion of the airbag door on the core. The core includes a fixed core fixed to a support plate and a moving core movably connected to the support plate. The moving core includes a center core to form a door plate of the airbag door and a side core to form a sidewall frame of the airbag door.

## Description

### CROSS-REFERENCE TO RELATED APPLICATION

This application claims priority to and the benefit of Korean Patent Application No. 10-2025-0016690, filed on February 10, 2025, in the Korean Intellectual Property Office, the entire disclosure of which is incorporated herein by reference in its entirety for all purposes.

### BACKGROUND

### 1. Field

The present invention relates to a crash pad manufacturing apparatus, and more specifically, to a crash pad manufacturing apparatus for manufacturing a crash pad having an airbag door, into which a scrim is inserted, through an insert injection molding.

### 2. Description of the Related Art

Generally, vehicle airbags are installed for the purpose of protecting occupants through the cushioning action of the airbags in the event of a collision. Particularly, a passenger airbag (PAB) which is installed inside a crash pad in front of the passenger seat to protect a passenger is a mandatory requirement.

A PAB is formed to deploy when an airbag door provided in a crash pad is opened. The airbag door is opened in a rotation manner, and a scrim in a fabric sheet type is used as a reinforcing member in order to reinforce the strength of a hinge which is a rotational part of the airbag door.

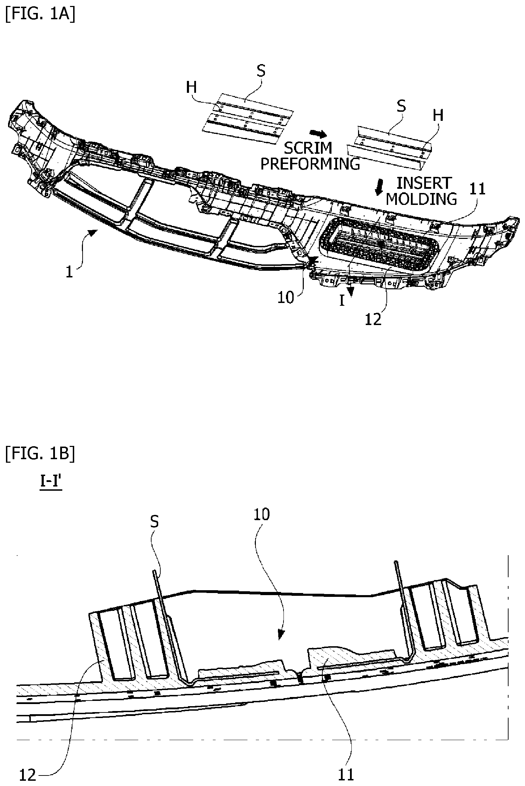

Conventionally, as shown in FIGS. 1A and 1B, a process of preforming a scrim S manufactured in a flat shape to correspond to a shape of a door plate 11 and sidewall frame 12 of an airbag door 10 using a separate apparatus was required. In addition, the scrim S preformed through the additional process was inserted in a molding location in a mold, and a crash pad 1 having the airbag door 10 was manufactured through the insert injection. Accordingly, since the process of preforming a scrim to correspond to an airbag door and a separate customized apparatus for the preforming process were required, there was a problem of increasing a manufacturing time, costs, and an investment.

### SUMMARY

The present disclosure seeks to provide a crash pad manufacturing apparatus for manufacturing a crash pad having an airbag door so that a manufacturing time, costs, and an investment are reduced by omitting an additional process of preforming a scrim using a separate apparatus.

In a general aspect of the disclosure, a crash pad manufacturing apparatus for manufacturing a crash pad having an airbag door, the crash pad manufacturing apparatus includes: a first mold including a core for molding the airbag door and the crash pad; a second mold coupled to the first mold to form a molding space on the core; and a chuck assembly for seating a scrim on a molding portion of the airbag door on the core, wherein the core includes a fixed core fixed to a support plate and a moving core movably connected to the support plate, and wherein the moving core includes a center core configured to form a door plate of the airbag door and a side core configured to form a sidewall frame of the airbag door.

The moving core may further include: a core body including an inner space having a straight section horizontally extending from the support plate and an inclined section which obliquely extends upward from the straight section and is connected to the molding space; a cam block configured to move forward and backward in the straight section; and scrim fixing blocks disposed on an upper end of the center core and rotatably connected to one side surface and another side surface of the center core, wherein the side core is configured to slidably move in the inclined section, and wherein the center core is configured to slidably move along a movement hole included in the side core.

In a state in which the center core is disposed outside the side core, each of the scrim fixing blocks may be configured to rotate outward from the center core such that an inner surface of the scrim fixing block is separated from a side surface of the center core.

In an open state in which the scrim fixing block is separated from the center core, a central region of the scrim may be brought into close contact with an upper surface of the center core and an edge region of the scrim is bent toward the side surface of the center core by the chuck assembly.

In a state in which the center core is disposed in the side core, an inner surface of the scrim fixing block may be in close contact with a side surface of the center core between the side core and the center core.

In a closed state in which the scrim fixing block is in close contact with the center core, an edge region of the scrim may be fixedly fitted between the inner surface of the scrim fixing block and the side surface of the center core.

The center core may include an undercut pin which fixes the scrim to an upper surface of the center core, wherein the undercut pin may include a rod portion which moves upward or downward in the center core and a head portion radially expanding from an upper end of the rod portion.

The cam block may include a guide groove to which a lower end of the center core is connected to be movable slidably, wherein the guide groove may be provided as a downward inclined structure.

The chuck assembly may be configured to deform a flat shaped scrim placed on the center core into a shape corresponding to an upper surface and side surface of the center core.

The chuck assembly may include: a first pusher configured to move forward and backward to bring a central region of the scrim into close contact with an upper surface of the center core; and a pair of second pushers disposed at both sides with the first pusher interposed therebetween and configured to move forward and backward to bend an edge region of the scrim toward a side surface of the center core such that the edge region of the scrim is in close contact with the side surface of the center core.

### BRIEF DESCRIPTION OF THE DRAWINGS

FIG. 1A is a view illustrating a crash pad having an airbag door;
FIG. 1B is a cross-sectional view along line I-I' of FIG. 1A;
FIG. 2 is a view illustrating a crash pad manufacturing apparatus according to an embodiment of the present invention;
FIG. 3 is a view illustrating a moving core in a first mold of the crash pad manufacturing apparatus;
FIG. 4 is a view illustrating a center core, a side core, and a scrim fixing block which are included in the moving core;
FIG. 5 is a view illustrating a cam block, the center core, the scrim fixing block, and the side core;
FIGS. 6 to 9 are views illustrating the configuration and operation of the moving core;
FIG. 10 is a view illustrating an undercut pin included in the center core;
FIG. 11 is a view illustrating a chuck assembly in the crash pad manufacturing apparatus; and
FIGS. 12 to 17 are views illustrating operation of the chuck assembly to seat a scrim on the center core.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

A crash pad manufacturing apparatus according to the embodiment of the present invention may be configured to manufacture a crash pad 1 having an airbag door 10 through an insert injection molding. A scrim S may be formed to be inserted into the airbag door 10. In this case, the scrim S may be provided in an unfolded flat state. That is, as shown in FIG. 1, the scrim S may be provided in a state in which the scrim S is not preformed to correspond to a structure of the airbag door 10.

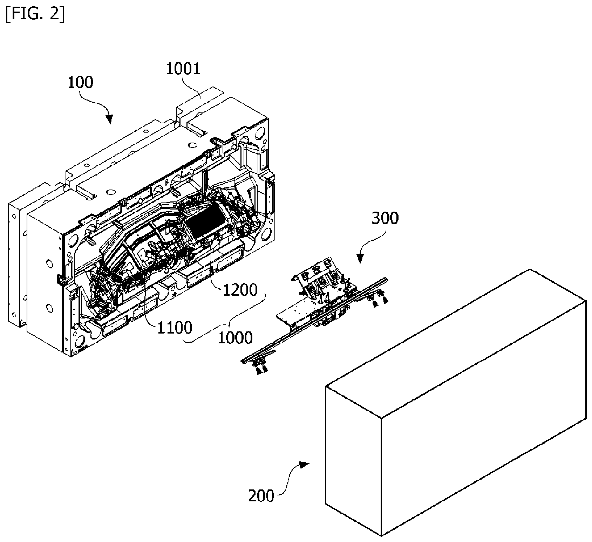

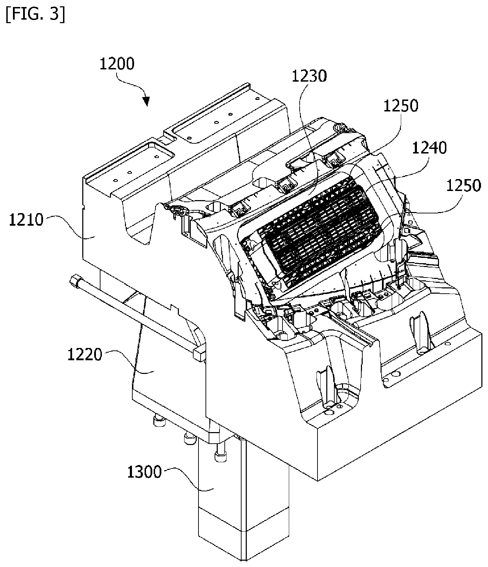

In FIGS. 2 to 17, the crash pad manufacturing apparatus and the configuration and operation thereof according to the embodiment of the present invention are illustrated.

Referring to the drawings, the crash pad manufacturing apparatus according to the embodiment of the present invention may include a first mold 100, a second mold 200, and a chuck assembly 300.

The first mold 100 and the second mold 200 may have a mutually coupled structure and may be configured to manufacture the crash pad 1 having the airbag door 10 through the insert injection molding.

The first mold 100 may include a core 1000 for molding the airbag door 10 and the crash pad 1. The second mold 200 may be coupled to the first mold 100 to form a molding space in the core 1000.

The core 1000 may include a fixed core 1100 fixed to a support plate 1001 and a moving core 1200 movably connected to the support plate 1001. A center core 1240 for forming a door plate 11 of the airbag door 10 and a side core 1230 for forming a sidewall frame 12 of the airbag door 10 may be included in the moving core 1200.

The moving core 1200 may include a core body 1210, a cam block 1220, the side core 1230, the center core 1240, and a scrim fixing block 1250.

The core body 1210 may be connected to the support plate 1001 to be movable forward and backward by a first hydraulic cylinder 1300. That is, as a rod 1310 of the first hydraulic cylinder 1300 extends or shrinks, the core body 1210 may move forward from the support plate 1001 or move backward toward the support plate 1001. In a state in which the core body 1210 moves backward toward the support plate 1001, a surface of the core body 1210 may continue from a surface of the fixed core 1100.

The core body 1210 may include an inner space 1211 including a straight section 1211a horizontally extending from the support plate 1001 and an inclined section 1211b which obliquely extends upward from the straight section 1211a and is connected to the molding space. In this case, the molding space may include a region on the surface of the core body 1210.

The cam block 1220 may move forward and backward in the straight section 1211a. The cam block 1220 may be connected to the support plate 1001 to be movable forward and backward by a second hydraulic cylinder 1400. That is, as a rod 1410 of the second hydraulic cylinder 1400 extends or shrinks, the cam block 1220 may move forward from the support plate 1001 or move backward toward the support plate 1001.

The cam block 1220 may include a guide groove 1221 to which a lower end of the center core 1240 is connected to be movable slidably. In the embodiment, the guide groove 1221 may be provided as a downward inclined structure that intersects the inclined section 1211b.

The side core 1230 may slidably move in the inclined section 1211b. The side core 1230 may have an overall rectangular shape and include an accommodation space 1231 exposed through the surface of the core body 1210 and a movement hole 1232 passing through the accommodation space 1231.

Frame members 1233 for forming the sidewall frame 12 of the airbag door 10 may be provided on side surfaces of the accommodation space 1231 in a width direction.

The center core 1240 may slidably move along the movement hole 1232 provided in the side core 1230. In the embodiment, as the lower end of the center core 1240 is connected to the guide groove 1221 of the cam block 1220, and the cam block 1220 moves forward and backward, the center core 1240 may move along the guide groove 1221 and slidably move along the movement hole 1232 at the same time. Specifically, when the cam block 1220 moves forward, the center core 1240 moves slidably to an upper portion of the guide groove 1221 of the cam block 1220 while being moved forward along the movement hole 1232 by a pushing force of the cam block 1220. In addition, when the cam block 1220 moves backward, the center core 1240 moves slidably to a lower portion of the guide groove 1221 of the cam block 1220 while being moved backward along the movement hole 1232 by a pulling force of the cam block 1220.

An upper surface of the center core 1240 may have an overall rectangular shape. The upper surface of the center core 1240 may be exposed through the surface of the core body 1210 in the side core 1230 and form the door plate 11 of the airbag door 10.

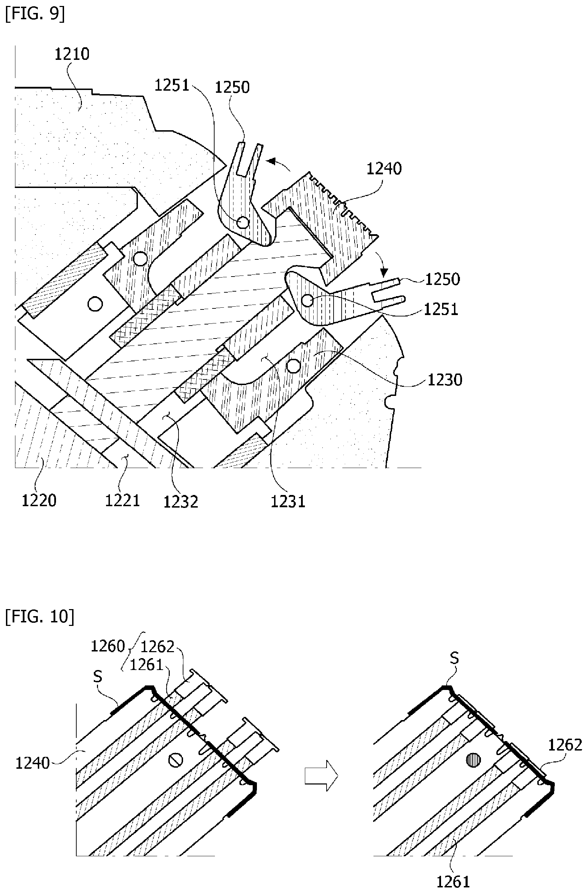

As shown in FIG. 10, the center core 1240 may include an undercut pin 1260 which fixes the scrim S to the upper surface of the center core 1240.

The undercut pin 1260 may include a rod portion 1261 which moves upward or downward in the center core 1240 and a head portion 1262 radially expanding from an upper end of the rod portion 1261.

The rod portion 1261 may have a rod-shaped structure of which a cross section has a circular shape, the head portion 1262 may be connected to the upper end of the rod portion 1261 and disposed on the upper surface of the center core 1240.

The undercut pin 1260 may be inserted to pass through a pinhole H included in the scrim S when the scrim S is placed on the upper surface of the center core 1240 using the chuck assembly 300. In addition, when the rod portion 1261 moves downward, the head portion 1262 fixes the scrim S by bringing the scrim S into close contact with the upper surface of the center core 1240 around the pinhole H.

The undercut pin 1260 allows the scrim S placed on the upper surface of the center core 1240 to be arranged correctly. In addition, the undercut pin 1260 may prevent the scrim S from being separated from the upper surface of the center core 1240 due to a pressure of a resin filling the molding space (for example, occurrence of a delamination phenomenon) or from changing a location of the scrim S by pushing caused by the movement of the resin, while an injection process is performed.

The scrim fixing block 1250 may be provided as a pair of scrim fixing blocks 1250, and the pair of scrim fixing blocks 1250 may be disposed on an upper end of the center core 1240 and connected to one side surface and the other side surface of the center core 1240 to be rotatable about hinge shafts 1251.

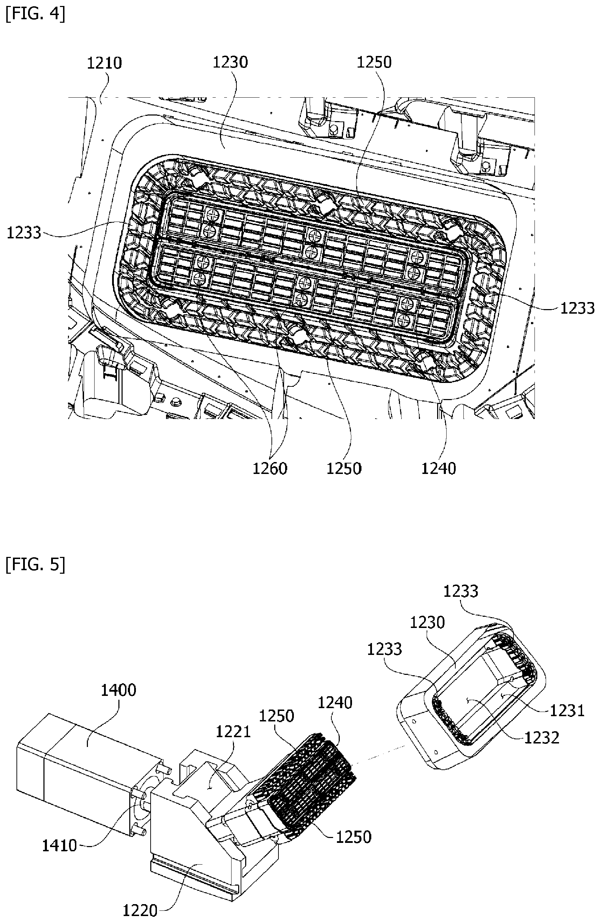

Referring to FIGS. 4 and 5, the scrim fixing blocks 1250 may be disposed on both side surfaces of the accommodation space 1231 in a longitudinal direction and connected to the frame members 1233 provided on both side surfaces of the accommodation space 1231 in the width direction. In addition, a frame structure, which surrounds a perimeter of the center core 1240 in a ring shape with the frame member 1233, may be formed to form the sidewall frame 12 of the airbag door 10.

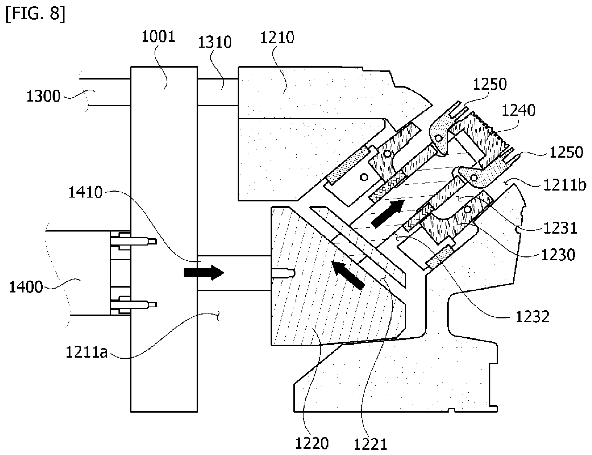

The scrim fixing block 1250 may protrude upward from the side core 1230 with the center core 1240 due to forward movement of the center core 1240 and may be disposed outside the accommodation space 1231 of the side core 1230. In this case, the scrim fixing block 1250 is formed to rotate outward from the center core 1240 such that an inner surface of the scrim fixing block 1250 is separated from a side surface of the center core 1240 (see FIGS. 8 and 9).

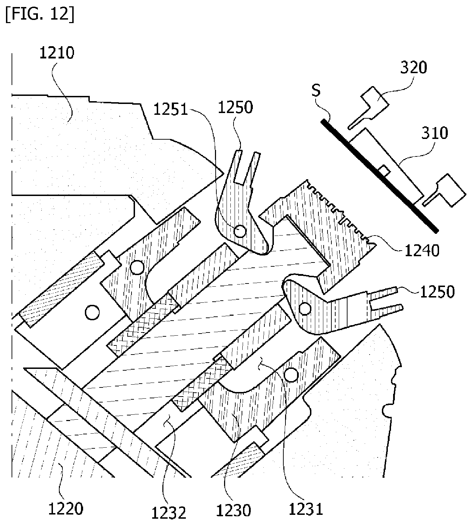

In an open state in which the scrim fixing block 1250 is separated from the center core 1240, a central region of the scrim S is brought into close contact with the upper surface of the center core 1240 by the chuck assembly 300, and an edge region of the scrim S is bent toward the side surface of the center core 1240 (see FIGS. 12 to 14).

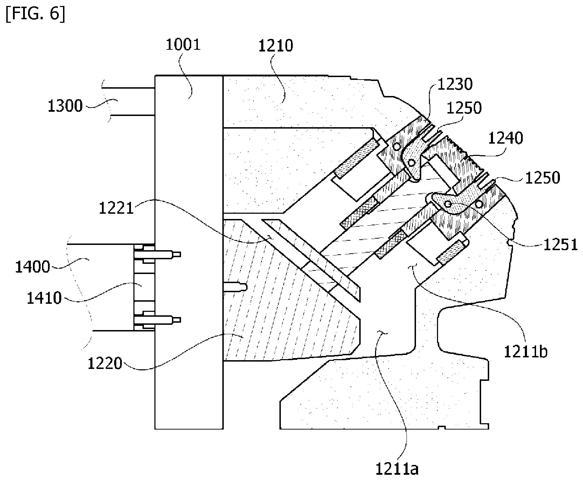

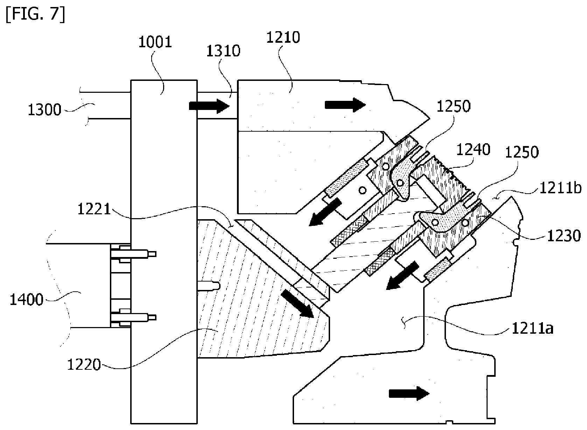

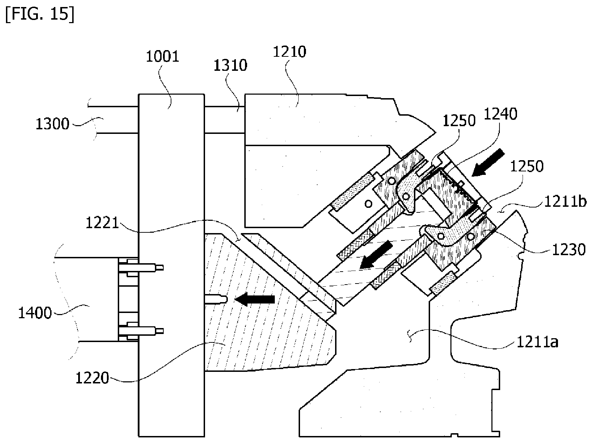

In addition, as shown in FIG. 15, the scrim fixing block 1250 may be disposed in the accommodation space 1231 of the side core 1230 with the center core 1240 due to backward movement of the center core 1240. In this case, an inner surface of the scrim fixing block 1250 is formed in close contact with the side surface of the center core 1240 between the side core 1230 and the center core 1240 (see FIGS. 6 and 7).

In a closed state in which the scrim fixing block 1250 is in close contact with the center core 1240, The edge region of the scrim S is fixedly fitted between the inner surface of the scrim fixing block 1250 and the side surface of the center core 1240 (see FIGS. 15 to 17).

The chuck assembly 300 may seat the scrim S on a molding portion of the core 1000 on which the airbag door 10 is molded. That is, the chuck assembly 300 is configured to load the scrim S having a flat shape on the center core 1240 and to deform the scrim S placed on the center core 1240 into a shape corresponding to the upper surface and side surface of the center core 1240.

In the embodiment, the chuck assembly 300 may be transferred to an upper portion of the center core 1240 by a transfer device, which is not illustrated, in a state in which the first mold 100 is separated from the second mold 200.

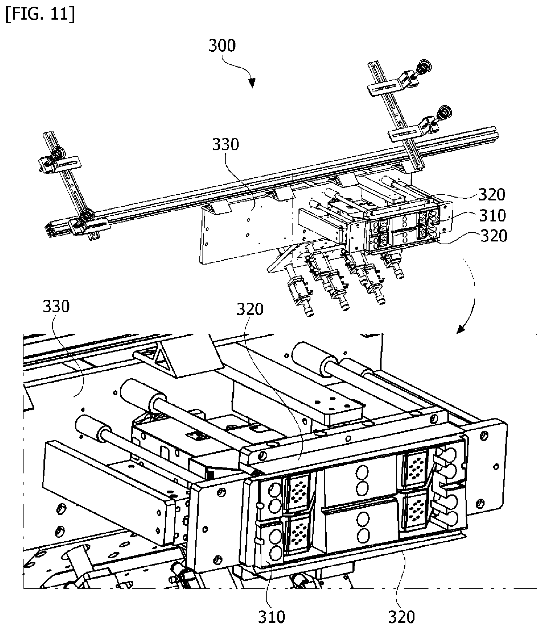

Referring to FIG. 11, the chuck assembly 300 may include a first pusher 310 and a pair of second pushers 320. The first pusher 310 and the second pusher 320 may be connected to a base frame 330 to be movable forward and backward.

The first pusher 310 may be configured to move forward and backward to bring the central region of the scrim S into close contact with the upper surface of the center core 1240.

The second pushers 320 may be disposed at both sides with the first pusher 310 interposed therebetween and configured to move forward and backward to bend the edge region of the scrim S toward the side surface of the center core 1240 such that the edge region of the scrim S is in close contact with the side surface of the center core 1240.

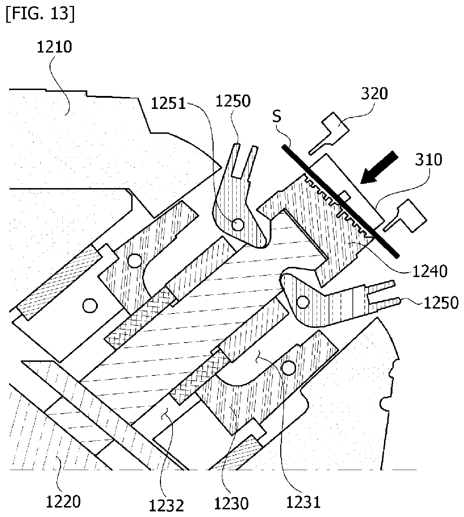

As shown in FIGS. 12 and 13, in the open state in which the scrim fixing block 1250 is separated from the center core 1240, the first pusher 310 moves forward to bring the central region of the scrim S into close contact with the upper surface of the center core 1240. In this case, a position of the scrim S may be fixed by the undercut pin 1260.

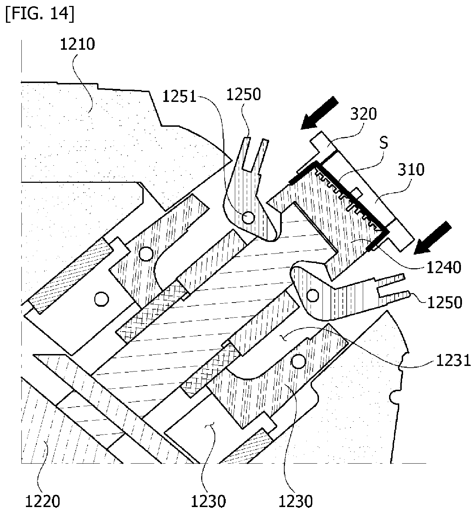

When the central region of the scrim S is brought into contact with the upper surface of the center core 1240 by the first pusher 310, as shown in FIG. 14, the second pushers 320 move forward to bend the edge region of the scrim S toward the side surface of the center core 1240.

As described above, the scrim S in the flat state may be deformed into substantially a "⊂" shape to correspond to a shape of the door plate 11 and sidewall frame 12 of the airbag door 10 by operation of the first pusher 310 and the second pushers 320.

Referring to FIG. 15, the first pusher 310 and the second pushers 320 move with the center core 1240 when the center core 1240 moves to the accommodation space 1231 of the side core 1230 in a state in which the scrim S is in close contact with the center core 1240. The center core 1240 moves backward and enters the accommodation space 1231 as the cam block 1220 moves backward toward the support plate 1001 by the second hydraulic cylinder 1400.

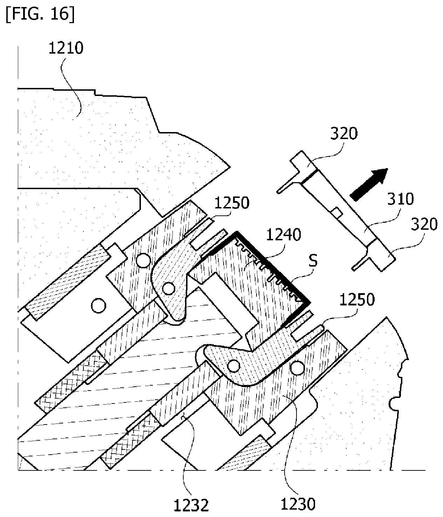

In the closed state in which the scrim fixing block 1250 is in close contact with the center core 1240, when the edge region of the scrim S is fixedly fitted between the inner surface of the scrim fixing block 1250 and the side surface of the center core 1240, as shown in FIG. 16, the first pusher 310 and the second pushers 320 move backward and are separated from the center core 1240.

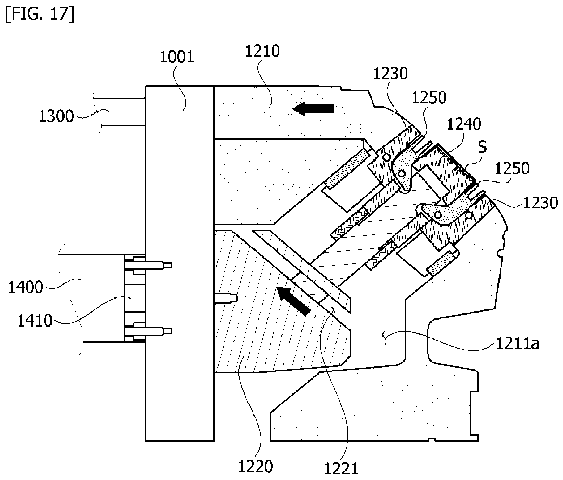

As shown in FIG. 17, when the core body 1210 moves backward toward the support plate 1001 by the first hydraulic cylinder 1300, a surface of the center core 1240 on which the scrim S is seated is disposed as a structure continuously connected to the surface of the core body 1210.

When the chuck assembly 300 is separated from the first mold 100, the second mold 200 is coupled to the first mold 100, and an injection molding process of the crash pad 1 is performed by injecting a resin into the molding space.

As described above, according to the embodiment of the present invention, the scrim S manufactured in the flat shape may be used to manufacture the crash pad 1 having the airbag door 10. Accordingly, since the conventional process of preforming a scrim S using a separate apparatus can be omitted, an entire process can be simplified.

Particularly, since the conventional separate apparatus for preforming scrim is not needed, there is an advantage of reducing costs and an investment.

According to an embodiment of the present invention, a crash pad manufacturing apparatus for manufacturing a crash pad having an airbag door so that a manufacturing time, costs, and an investment are reduced by omitting an additional process of preforming a scrim using a separate apparatus can be provided.

Effects of the present invention are not limited to the above-described effects, and other effects which are not described above will be clearly understood by those skilled in the art through the appended claims.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A crash pad manufacturing apparatus for manufacturing a crash pad having an airbag door, the crash pad manufacturing apparatus comprising:
a first mold including a core for molding the airbag door and the crash pad;
a second mold coupled to the first mold to form a molding space on the core; and
a chuck assembly for seating a scrim on a molding portion of the airbag door on the core,
wherein the core includes:
a fixed core fixed to a support plate; and
a moving core movably connected to the support plate, and
wherein the moving core includes:
a center core configured to form a door plate of the airbag door; and
a side core configured to form a sidewall frame of the airbag door.

2. The crash pad manufacturing apparatus of claim 1, wherein the moving core further includes:
a core body including an inner space having a straight section horizontally extending from the support plate and an inclined section which obliquely extends upward from the straight section and is connected to the molding space;
a cam block configured to move forward and backward in the straight section; and
scrim fixing blocks disposed on an upper end of the center core and rotatably connected to one side surface and another side surface of the center core,
wherein the side core is configured to slidably move in the inclined section, and
wherein the center core is configured to slidably move along a movement hole included in the side core.

3. The crash pad manufacturing apparatus of claim 2, wherein, in a state in which the center core is disposed outside the side core, each of the scrim fixing blocks is configured to rotate outward from the center core such that an inner surface of the scrim fixing block is separated from a side surface of the center core.

4. The crash pad manufacturing apparatus of claim 2 or 3, wherein, in an open state in which the scrim fixing block is separated from the center core, a central region of the scrim is brought into close contact with an upper surface of the center core and an edge region of the scrim is bent toward the side surface of the center core by the chuck assembly.

5. The crash pad manufacturing apparatus of any one of claims 2 to 4, wherein, in a state in which the center core is disposed in the side core, an inner surface of the scrim fixing block is in close contact with a side surface of the center core between the side core and the center core.

6. The crash pad manufacturing apparatus of claim 5, wherein, in a closed state in which the scrim fixing block is in close contact with the center core, an edge region of the scrim is fixedly fitted between the inner surface of the scrim fixing block and the side surface of the center core.

7. The crash pad manufacturing apparatus of any one of claims 2 to 6, wherein the center core includes an undercut pin which fixes the scrim to an upper surface of the center core, and
wherein the undercut pin includes:
a rod portion which moves upward or downward in the center core; and
a head portion radially expanding from an upper end of the rod portion.

8. The crash pad manufacturing apparatus of any one of claims 2 to 7, wherein the cam block includes a guide groove to which a lower end of the center core is connected to be movable slidably, and
wherein the guide groove is provided as a downward inclined structure.

9. The crash pad manufacturing apparatus of any one of claims 1 to 8, wherein the chuck assembly is configured to deform a flat shaped scrim placed on the center core into a shape corresponding to an upper surface and side surface of the center core.

10. The crash pad manufacturing apparatus of any one of claims 1 to 9, wherein the chuck assembly includes:
a first pusher configured to move forward and backward to bring a central region of the scrim into close contact with an upper surface of the center core; and
a pair of second pushers disposed at both sides with the first pusher interposed therebetween and configured to move forward and backward to bend an edge region of the scrim toward a side surface of the center core such that the edge region of the scrim is in close contact with the side surface of the center core.
